Europäisches Patentamt

European Patent Office

Office européen des brevets

(11) Veröffentlichungsnummer: **0 356 643 B1**

(19)

(12) # EUROPÄISCHE PATENTSCHRIFT

(45) Veröffentlichungstag der Patentschrift: **16.12.92**

(21) Anmeldenummer: **89111264.1**

(22) Anmeldetag: **21.06.89**

(51) Int. Cl.⁵: **B29C 33/52**

(54) **Anlage zum Ausschmelzen von Kunststoffspritzkernen.**

(30) Priorität: **31.08.88 DE 3829475**

(43) Veröffentlichungstag der Anmeldung:
**07.03.90 Patentblatt 90/10**

(45) Bekanntmachung des Hinweises auf die
Patenterteilung:
**16.12.92 Patentblatt 92/51**

(84) Benannte Vertragsstaaten:
**DE ES FR GB IT**

(56) Entgegenhaltungen:
**DE-A- 3 725 679**

**ATZ AUTOMOBILTECHNISCHE ZEITSCHRIFT,
Band 89, Nr. 3, März 1987, Seiten 139-144;
H.-G. HALDENWANGER et al.:
"Kunststoff-Motorbauteile in Ausschmelzkerntechnik am Beispiel eines Saugrohres"**

**KUNSTSTOFFE, Band 77, Nr. 12, Dezember
1987, Seiten 1237-1240, Münich, DE; C.
HAUCK et al.: "Optimieren der Schmelzkerntechnik für das Thermoplast-Spritzgiessen"**

**VDI-GESELLSCHAFT KUNSTSTOFFENTECH-
NIK - "Kunststoffe im Fahrzeugbau - Technik
und Wirtschaftlichkeit", März 1988, Seiten**

**245-281, VDI-Verlag GmbH, Düsseldorf, DE**

(73) Patentinhaber: **AEG-Elotherm GmbH
Hammesberger Strasse 31
W-5630 Remscheid-Hasten(DE)**

(72) Erfinder: **Model, Hans-Jürgen, Dipl.-Ing.
Remscheider Strasse 135
W-5630 Remscheid(DE)**
Erfinder: **Stengel, Edgar, Dipl.-Ing.
Erdelenstrasse 35
W-5630 Remscheid(DE)**
Erfinder: **Jürgens, Robert, Dipl.-Ing.
Oelmühle 11e
W-5630 Remscheid(DE)**
Erfinder: **Neurath, Gerd Dieter, Dipl.-Ing.
Saturnstrasse 8
W-5620 Velbert(DE)**

(74) Vertreter: **Cohausz & Florack Patentanwälte
Postfach 14 01 61 Schumannstrasse 97
W-4000 Düsseldorf 1(DE)**

EP 0 356 643 B1

## Beschreibung

Die Erfindung betrifft eine Anlage zum Ausschmelzen eines aus niedrig schmelzendem Metall bestehenden Kerns aus dem Hohlraum von Kunststoffspritzteilen.

In zunehmendem Maße werden Maschinen- und Motorenteile statt aus metallenen Werkstoffen aus Kunststoff gefertigt, siehe "Jahrestagung 88 der Automobilbauer", März 1988, VDI-Gesellschaften Fahrzeugtechnik Kunststofftechnik, Seiten 245 - 281. Als Kunststoffe setzt man dabei bevorzugt faserverstärkte Duroplaste, nämlich Polyamide, Polyolefine, Polysulfone, Polyether und Polyacryl, ein (a.a.O., S. 252/53). Die Herstellung hohler Kunststoffspritzteile erfolgt in der Weise, daß man den Kern aus einem niedrig schmelzenden Metall (dieser Begriff umfaßt hier auch Metallegierungen) gießt, ihn in eine Spritzform einsetzt und den Hohlraum mit dem Kunststoff ausspritzt (a.a.O., S. 263). Anschließend muß das Kernmaterial aus dem Kunststoffspritzteil ausgeschmolzen werden. Diese Gießtechnik mit verlorenem Kern, für den man hauptsächlich eine Zinn-Wismut-Legierung verwendet, ist seit langem bekannt. Das Ausschmelzen des Kerns wird auf elektro-induktivem Weg in einem aliphatischen Alkohol als Wärmeträger durchgeführt (a.a.O. Seite 266). Die nicht von selbst aus dem Hohlraum des Kunststoffspritzteils ausfließenden Kernmaterialreste werden durch eine Schwenkbewegung in der Wärmeträgerflüssigkeit herausgeholt. Das ausgeschmolzene Kernmetall sammelt sich am Behälterboden in flüssiger Phase und wird wieder der Gießanlage zugeführt, wodurch der Kreislauf für das Kernmaterial geschlossen ist.

Der Erfindung liegt nunmehr die Aufgabe zugrunde, eine Anlage zum Ausschmelzen eines aus niedrig schmelzendem Metall (oder Metallegierung) bestehenden Kerns aus dem Hohlraum von Kunststoffspritzteilen vorzuschlagen, die bei geringem konstruktivem Aufwand in Abhängigkeit von der Taktzeit des Ausstoßes der vorgeschalteten Spritzvorrichtung sicher arbeitet.

Zur Lösung dieser Aufgabe wird erfindungsgemäß eine Anlage mit folgenden Merkmalen vorgeschlagen:

(a) ein mit Wärmeträgerflüssigkeit gefüllter Behälter, an dessen Boden eine Austragleitung für das ausgeschmolzene Metall angeflanscht ist,

(b) einer oberhalb des Behälterbodens angeflanschten Pumpleitung für die Wärmeträgerflüssigkeit, die mit der Saugseite der Pumpe verbunden ist,

(c) zwei Ausschmelzstationen mit je einer mit vertikaler Achse in den Behälter gestellter Induktionsspule, deren Hohlleiter an die Druckseite der Pumpleitung angeschlossen und von der Wärmeträgerflüssigkeit als Kühlmedium durchströmt ist

(d) zwei Auswaschstationen und

(e) ein Manipulator, mit einem sich über die Ein- und Austragseite des Behälters hinaus erstreckenden Arbeitsbereich.

Die erfindungsgemäße Ausschmelzanlage besteht also aus einem Behälter, der aus Edelstahl bestehen kann, innen eine Kunststoffbeschichtung und aussen eine Wärmedämmung besitzt. Eine Füllstandsmessung kann vorgesehen sein. Der Boden des Behälters kann schräg abfallen und es kann eine wannenförmige Vertiefung zur Aufnahme des ausgeschmolzenen schmelzflüssigen Kernmaterials vorgesehen sein. Über einen Siphon wird das flüssige Kernmetall von der im Behälter enthaltenen Wärmeträgerflüssigkeit getrennt. Durch eine am Behälter angeflanschte Austragleitung kann das schmelzflüssige Metall zur Spritzmaschine zurückgeführt werden.

Eine Pumpleitung, in die eine Pumpe eingeschaltet ist, ist im Bereich des Behälterbodens mit ihrer Saugseite angeschlossen und fördert Wärmeträgerflüssigkeit aus dem Behälter zu den Hohlleitern der Induktionsspulen.

Im Behälter sind zwei Ausschmelzstationen gebildet, die aus je einer mit vertikaler Achse auf dem Behälterboden aufgestellten Induktionsspule bestehen, in die jeweils ein Kunststoffspritzteil zum Ausschmelzen des Kernmaterials einsetzbar ist. Die beiden Induktionsspulen sind voll in die Wärmeträgerflüssigkeit im Behälter eingetaucht. Die Hohlleiter der Induktionsspulen werden über die bereits erwähnte Pumpleitung mit Wärmeträgerflüssigkeit aus dem Behälter als Kühlmedium versorgt.

Das hat den großen Vorteil, daß die von den Induktionsspulen erzeugte überschüssige Wärme zur Kompensation der durch natürliche Konvektion von der freien Oberfläche aus der Wärmeträgerflüssigkeit und durch Wärmeleitung über die Behälterwandung entweichenden und vom ausgetragenen flüssigen Kernmaterial mitgeführten Wärme verwendet werden kann. Eine zusätzliche Beheizung der Wärmeträgerflüssigkeit durch eigens dafür im Behälter installierte Heizstäbe oder dergleichen ist deshalb entbehrlich. Dadurch wird einmal der Energieverbrauch optimiert und zum anderen der konstruktive Aufwand minimiert.

Der Behälter enthält ferner zwei Auswaschstationen, in denen die in den Ausschmelzstationen aus den Kunststoffspritzteilen nicht ausgelaufenen Reste des Kernmaterials entfernt werden. Dazu werden die Kunststoffspritzteile in geeigneter Weise geschüttelt, getaumelt, gedreht und/oder hin- und herbewegt.

Auch in der Auswaschstation ist das dort jeweils befindliche Werkstück voll in die Wärmeträgerflüssigkeit eingetaucht. Die Wärmeträgerflüssigkeit hat eine Temperatur, die jeweils einige Grade oberhalb der Schmelztemperatur des Kernmaterials liegt, damit sichergestellt ist, daß dieses ausschmilzt. Der wesentliche Teil des Kernmaterials wird in den Ausschmelzstationen durch induktive Erwärmung aus dem Kunststoffspritzteil entfernt, unterstützt durch die Wärme, die von der Wärmeträgerflüssigkeit an die Wand des Kunststoffspritzteils abgegeben wird. In der Auswaschstation erfolgt das Ausschmelzen dann nur noch durch die Wärme der Wärmeträgerflüssigkeit.

Ein Manipulator ist derart angeordnet, daß sich sein Arbeitsbereich über die Ein- und Austragseite des Behälters hinaus erstreckt, d.h. daß er Werkstücke an der Eintragseite vor dem Kopfende des Behälters aufnehmen und an der gegenüberliegenden Austragseite zum Waschen und Trocknen außerhalb des Behälters absetzen kann. Die Zuordnung eines Manipulators zu zwei Ausschmelzstationen und zwei Auswaschstationen ermöglicht eine Anpassung der Behandlungszeiten der Werkstücke in der Ausschmelzstation und in der Auswaschstation an die Taktzeit der Kunststoffspritzmaschine.

In der Zeichnung ist ein Ausführungsbeispiel der erfindungsgemäßen Anlage dargestellt. Es zeigen:

Figur 1　　eine teilweise geschnittene Seitenansicht der Anlage,

Figur 2　　eine Draufsicht,

Figur 3　　eine teilweise geschnittene Frontansicht und

Figur 4　　ein Schema des Kühlkreislaufs der Anlage.

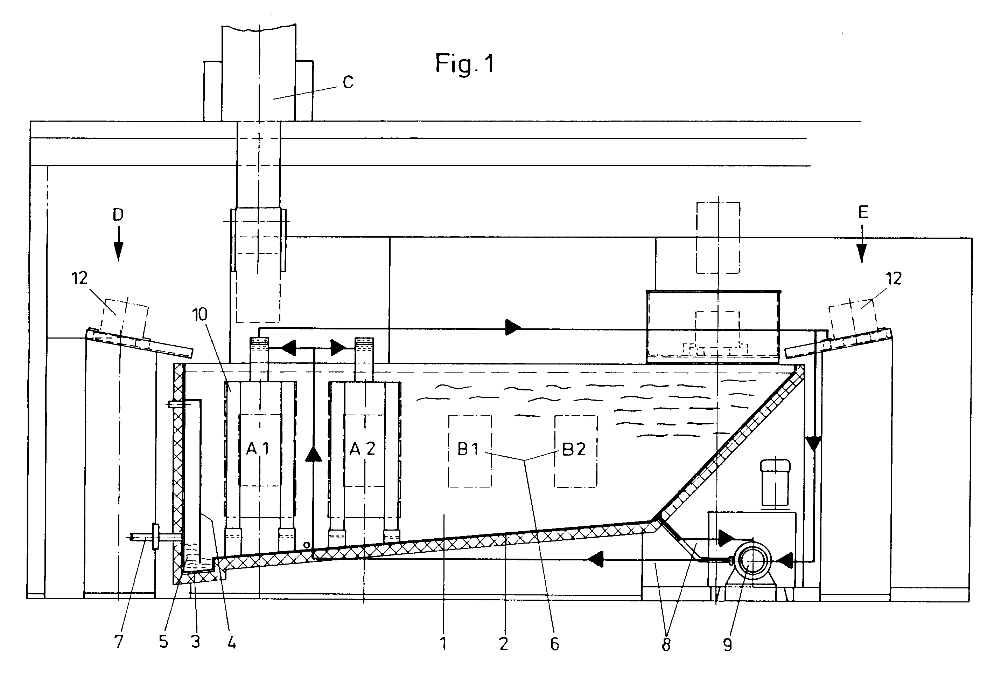

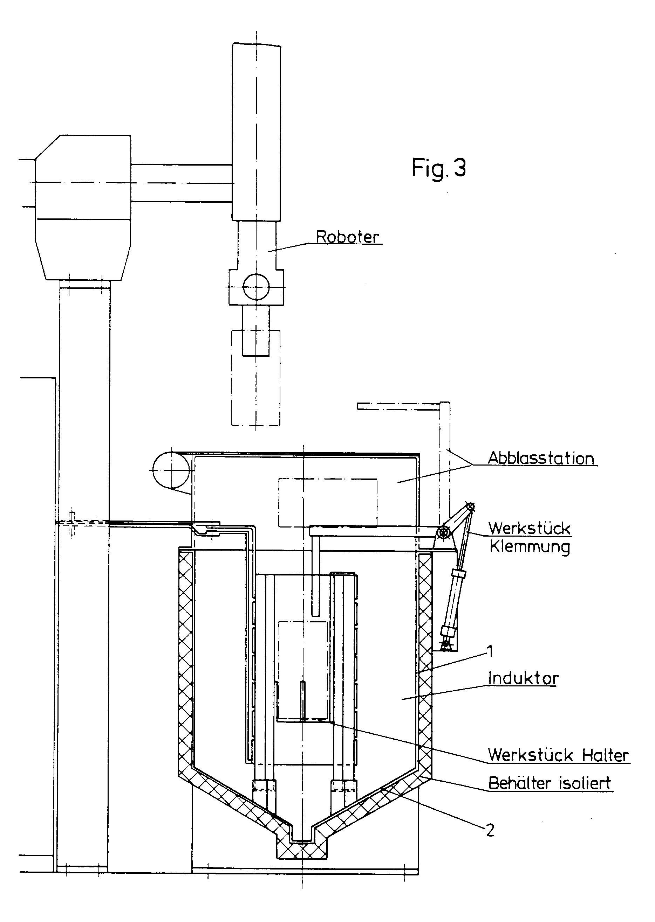

Der in Draufsicht rechteckige Behälter 1 hat einen vom Austragende zur Eintragseite schräg abfallenden Boden 2 (s. Fig. 1). Von der Frontseite in Figur 3 her betrachtet, verläuft der Behälterboden 2 zudem V-förmig.

Am tiefsten Ende mündet der Boden 2 des Behälters 1 in eine Wanne 3, die über einen Siphon-Verschluß 4 ausgeschmolzenes Metall 5 von Wärmeträgerflüssigkeit 6 trennt. Das schmelzflüssige Metall kann über eine Austragleitung 7 abgezogen und zur Gießstation zurückgefördert werden.

Oberhalb des Behälterbodens 2 befindet sich eine Leitung 8, über die von einer Pumpe 9 Wärmeträgerflüssigkeit 6 aus dem Behälter 1 abgezogen und den Hohlleitern der Induktionsspulen 10 an den Ausschmelzstationen A1 und A2 als Kühlmedium zugeführt wird. Nach dem Durchströmen der Hohlleiter der Induktionsspulen 10 wird die Wärmeträgerflüssigkeit 6 über einen Wärmetauscher W wieder in den Behälter 1 zurückleitet.

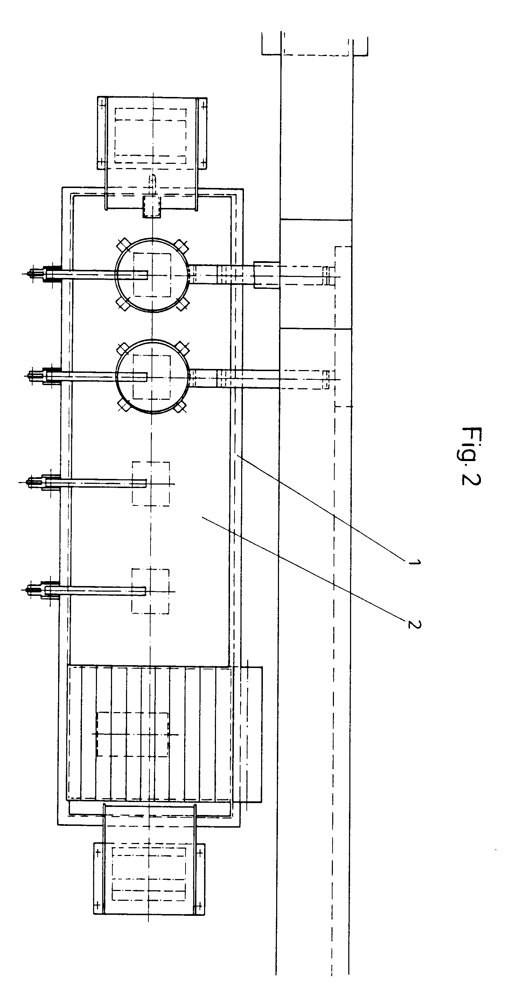

Im Behälter sind neben den Ausschmelzstationen A1 und A2 zwei Auswaschstationen B1 und B2 vorgesehen, die durch strichpunktierte Linien in Figur 1 und 2 angedeutet sind.

Ein Manipulator C überstreicht einen Arbeitsbereich von der Eintragseite D vor dem Behälter 1 zur Aufnahme eines dort bereit liegenden Werkstücks 12 über den Behälter 1 bis zu seiner Austragseite E am gegenüberliegenden Ende, wo das Werkstück 12 nach dem Ausschmelzen des Kernmaterials zur weiteren Bearbeitung durch Auswaschen, Trocknen und dergleichen vom Manipulator C abgesetzt wird.

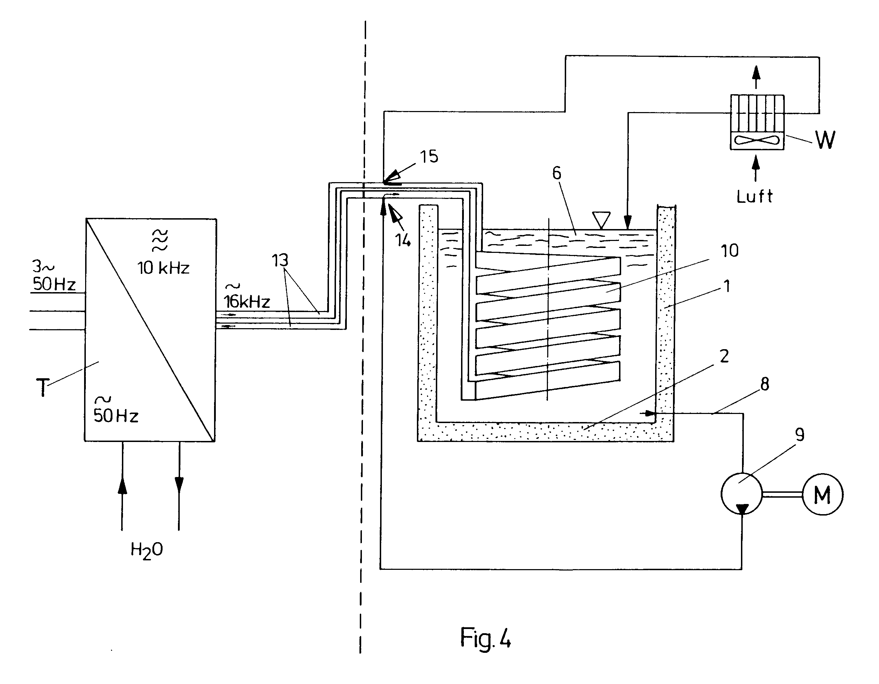

Gemäß Figur 4 ist der Anlage eine Drehstromtransformator/Umrichter-Einheit Umrichter-Einheit T zugeordnet zur Anpassung der Versorgungsspannung des Mittelfrequenz-Umrichters an die vorhandene Netzspannung sowie zur Potentialtrennung der Mittelfrequenz-Erwärmungseinrichtung vom Netz. Der Mittelfrequenz-Umrichter wandelt die vorhandene Netzfrequenz in die zur Induktionserwärmung benötigte einphasige Mittelfrequenz um. Über wassergekühlte Hochstromschienen 13 wird die elektrische Energie zu den Induktionsspulen 10 übertragen.

Wie Figur 4 weiter deutlich macht, fördert die in die Pumpleitung 8 eingeschaltete Pumpe 9 die Wärmeträgerflüssigkeit 6 an der Anschlußstelle 14 in den zur Induktionsspule 10 führenden Stromschienen-Hohlleiter. Die Wärmeträgerflüssigkeit durchströmt dann als Kühlmedium die Induktionsspule 10 und wird nach dem Durchströmen derselben an der Anschlußstelle 15 in einen Kühlkreislauf abgezweigt, in den ein Wärmetauscher W eingeschaltet ist, in welchem die Temperatur der Wärmeträgerflüssigkeit in jeweils gewünschter Weise geregelt werden kann. Je nach Wärmeverlust und Wärmezufuhr durch die Induktionsspulen 10 wird die Wärmeträgerflüssigkeit 6 in dem Wärmetauscher W gekühlt oder erwärmt mit dem Ziel, die Temperatur der Wärmeträgerflüssigkeit 6 im Behälter 1 konstant zu halten und möglichst wenig Fremdenergie zuführen zu müssen.

Der Ablauf bei der Beschickung und Behandlung von Werkstücken in der Ausschmelzanlage ist wie folgt:

Der Manipulator C greift das an der Eintragseite D an der Stirnseite des Behälters 1 bereitliegende Werkstück 12 und setzt es in eine freie Induktionsspule 10, beispielsweise an der Ausschmelzstation A1, zum Ausschmelzen des Kernmaterials ein. Dann entnimmt der Manipulator C das in der anderen Induktionsspule 10 an der Ausschmelzstation A2 befindliche Werkstück 12, aus dem inzwischen das Kernmaterial weitestgehend ausgeschmolzen ist, fördert es zu einer der Auswaschstationen, z.B. B1, die frei ist, und bewegt das Werkstück 12 zum Auswaschen der Reste an noch im Werkstück befindlichem Kernmaterial. Anschließend setzt der Manipulator C das Werkstück 12 an der betreffenden Auswaschstation B1 zunächst ab. Er holt dann das nächste an der Eintragseite D bereitliegende Werkstück 12 und setzt es in die nun freigewordene Induktionsspule 10 an der Ausschmelzstation A2 ein. Anschließend transportiert der Manipulator C das in der anderen Auswaschstation B2 inzwischen fertiggewordene Werkstück aus dem Behälter 1 heraus zur Austragseite E. Dann entnimmt der Manipulator C das in der Induktionsspule 10 an der Ausschmelzstation A1 fertiggewordene Werkstück 12 und setzt es nach einer Bewegung im Bad an der freien Auswaschstation B2 ab. Auf diese Weise wird die Wechselbeschickung der Ausschmelzstationen A1 und A2 sowie der Auswaschstationen B1 und B2 im angegebenen Turnus fortgesetzt.

**Patentansprüche**

1. Anlage zum Ausschmelzen eines aus niedrig schmelzendem Metall bestehenden Kerns aus dem Hohlraum von Kunststoffspritzteilen mit

(a) einem mit Wärmeträgerflüssigkeit gefüllten Behälter, an dessen Boden eine Austragleitung für das ausgeschmolzene Metall angeflanscht ist,

(b) einer oberhalb des Behälterbodens (2) angeflanschten Pumpleitung (8) für die Wärmeträgerflüssigkeit (6), die mit der Saugseite einer Pumpe (9) verbunden ist,

(c) zwei Ausschmelzstationen (A1, A2) mit je einer mit vertikaler Achse in den Behälter (1) gestellter Induktionsspule (10), deren Hohlleiter an die Druckseite der Pumpleitung (8) angeschlossen und von der Wärmeträgerflüssigkeit (6) als Kühlmedium durchströmt ist

(d) zwei Auswaschstationen (B1, B2) und

(e) einen Manipulator (C), mit einem sich über die Ein- und und Austragseite des Behälters (1) hinaus erstreckenden Arbeitsbereich.

2. Anlage nach Anspruch 1,
**dadurch gekennzeichnet,** daß eine Abströmleitung für die Wärmeträgerflüssigkeit (6) an einer Anschlußstelle (15) am Ausströmende der Hohlleiter der Induktionsspulen (10) angeflanscht ist, in der ein Wärmetauscher (W) eingeschaltet ist und die in den Behälter (1) mündet.

**Claims**

1. A plant for melting a core of low-melting metal from the cavity of injection moulded plastics parts having:

(a) a tank which is filled with a heat vehicling liquid and to whose bottom a discharge pipe for the melted out metal is flanged,

(b) a pump pipe (8) for the heat vehicling liquid (6) which is attached by a flange above the tank bottom (2) and connected to the intake side of a pump (9),

(c) two melting-out stations (A1, A2), each having an induction coil (10) which is placed vertically in the tank (1) and whose hollow conductor is connected to the delivery side of the pump pipe (8) and through which the heat vehicling liquid (6) flows as a cooling medium,

(d) two washing-out stations (B1, B2), and

(e) a manipulator (C) having an operating zone extending beyond the inlet and discharge side of the tank (1).

2. A plant according to claim 1, characterized in that attached by a flange at a connecting place (15) at the discharge end of the hollow conductors of the induction coils (10) is a discharge pipe for the heat vehicling liquid (6) which incorporates a heat exchanger (W) and discharges into the tank (1).

**Revendications**

1. Installation d'extraction par fusion d'un noyau constitué d'un métal à bas point de fusion hors du volume creux de pièces injectées en matière synthétique avec

(a) un récipient rempli de fluide caloporteur, sur le fond duquel est flasquée une conduite de décharge,

(b) une conduite de pompe (8) flasquée au-dessus du fond (2) du récipient pour le fluide caloporteur (6), qui est reliée au côté aspiration d'une pompe (9),

(c) deux stations d'extraction par fusion (A1, A2) avec chacune une bobine d'induction (10) disposée à axe vertical dans le récipient (1), dont le guide d'ondes est relié au côté pression de la conduite de pompe (8) et est traversé par le liquide caloporteur (6) en tant qu'agent de refroidissement,

(d) deux stations de lavage (B1, B2) et

(e) un manipulateur (C) avec une zone de travail s'étendant au-dessus sur les côtés d'introduction et de décharge du récipient (1).

2. Installation selon la revendication 1, caractérisée en ce qu'une conduite d'évacuation pour le fluide caloporteur (6) est flasquée à un point de raccordement (15) à l'extrémité d'évacuation des guides d'ondes des bobines d'induction (10), dans laquelle est inséré un échangeur de chaleur (W) et qui débouche dans le récipient (1).

Fig. 1

Fig. 2

Fig. 3

Roboter

Abblasstation

Werkstück
Klemmung

1

Induktor

Werkstück Halter

Behälter isoliert

2

Fig. 4

3~
50Hz

≈
10 kHz

~
16kHz

~
50Hz

T

H₂O

13

15

14

6

10

1

2

8

9

M

W

Luft

EP 0 356 643 B1